(19) Europäisches Patentamt
European Patent Office
Office européen des brevets

(11) Publication number: 0 409 496 A2

# (12) EUROPEAN PATENT APPLICATION

(21) Application number: 90307673.5

(22) Date of filing: 09.07.90

(51) Int. Cl.5: B01D 67/00, B01D 71/52, B01D 71/66, C08J 9/28

(30) Priority: 19.07.89 GB 8916441

(43) Date of publication of application: 23.01.91 Bulletin 91/04

(84) Designated Contracting States: AT BE CH DE DK ES FR GB GR IT LI LU NL SE

(71) Applicant: IMPERIAL CHEMICAL INDUSTRIES PLC
Imperial Chemical House, Millbank
London SW1P 3JF(GB)

(72) Inventor: Colquhoun, Howard Matthew
8 Grove Park
Knutsford, Cheshire WA16 8QA(GB)
Inventor: Lewis, David Frank
9 Blossom Heights, The Pippins
Moss Farm, Northwich CW 8 4TF(GB)

(74) Representative: Thomas, Ieuan et al
Imperial Chemical Industries PLC, Legal
Department: Patents, PO Box 6, Bessemer
Road
Welwyn Garden City, Herts, AL7 1HD(GB)

## (54) Microporous membranes.

(57) A liquid phase-inversion process for the preparation of a microporous membrane from a solution in a latent solvent and a flexible microporous membrane comprising a highly crystalline aromatic polymer bearing in-chain ether or thioether and ketone linkage's described.

EP 0 409 496 A2

# MICROPOROUS MEMBRANES

This invention relates to membranes, particularly microporous membranes suitable for use in filtration and to a process for the preparation thereof.

Ultrafiltration and microfiltration membranes can be prepared by the well established solvent phase-inversion process developed by Loeb and Sourijan (Adv. Chem. Ser. 38 , 117, 1963). In that process a selected polymer is dissolved in a solvent and subsequently precipitated by addition of a non-solvent under controlled conditions. Polymers that have been used in that process include cellulose acetate, polyimides, polyvinylidenefluoride, polysulphones, amorphous sulphonated polyetheretherketone, and polyamides. Solvents that have been used in that process include acetone, dimethylsulphoxide, dimethylformamide, dimethylacetamide, N-methylpyrrolidinone, concentrated sulphuric acid, and aqueous hydrochloric acid.

For such membranes, it is known that the size and density of the pores therein are dependent on the concentration of the polymer solution used in the aforementioned process and on the presence therein of pore-forming additives, e.g. salts, sugars and low polyethylene glycols (H Strathman in "Material Science of Synthetic Membranes", Lloyd, ACS 269 , 1984).

Ultrafiltration and microfiltration membranes can also be prepared by the so-called "thermal phase-inversion" process as described in more detail in "Synthetic Polymer Membranes, a Structural Perspective", Second Edition, R R Kesting, J Wiley and Sons, New York at 261-4. Such a process comprises the dissolving of the polymer at a high temperature in a latent solvent therefor, the cooling of the resulting solution to precipitate the membrane and the removal of the latent solvent from the membrane. As examples of polymers which have been used in such a process may be mentioned inter alia polyethylene, polypropylene, polycarbonate and polyvinyl chloride.

Membranes prepared from the aforesaid polymers tend to suffer from one or more of the following disadvantages. For example, they can be used in a limited temperature range, e.g. 0-90 °C; they are unable to withstand sterilisation by super-heated steam; they have a limited chemical stability to, for example, acids, bases and oxidising agents; they lack resistance to $\gamma$-radiation; they are soluble in, or swellable by, organic solvents, e.g. at room or elevated temperature.

We have now devised a process for the preparation of microporous membranes comprising an at least partially crystalline aromatic polymer containing in-chain ether or thioether and ketone linkages. The process allows the preparation of membranes from certain high melting point aromatic polymers, e.g. PEDK (as defined hereinafter), which membranes cannot be prepared by known thermal processes. The membranes prepared by the process of the present invention tend to have a higher crystallinity than those made from the same polymer hitherto, eg by the aforementioned solvent phase inversion process. The process of the present invention allows the membrane to be prepared in a suitable form or shape, from a solution of the polymer in a latent solvent for the polymer. As examples of such suitable forms or shapes may be mentioned inter alia tubular, capillary or sheet.

Furthermore, we have found that membranes prepared by the process of the present invention overcome many of the aforesaid disadvantages of known membranes. Such membranes may have (i) a pore size which allows their use in ultrafiltration and as a porous substrate for composite gas separation, pervaporation and reverse osmosis membranes, or (ii) a pore size which allows their use in microfiltration.

According to a first aspect of the present invention there is provided a process for the preparation of a microporous membrane comprising an at least partially crystalline aromatic polymer bearing in-chain (a) ether or thioether and (b) ketone linkages which process is characterised in that it comprises the steps of:

(A) dissolving the polymer in a latent solvent therefor;

(B) shaping the solution into a desired shape;

(C) allowing or causing the shaped solution to cool such that the membrane of a suitable form, shape, size and porosity is precipitated; and

(D) removing the latent solvent therefrom.

By varying the conditions under which the process according to the first aspect of the present invention is carried out, the skilled man, by experiment, will be able to prepare inter alia asymmetric membranes or isotropic membranes.

By "isotropic membranes" we mean membranes in which the structure and pore size remain substantially constant throughout the membrane.

By "asymmetric membranes" we mean membranes in which there is a variation of pore size across the thickness of the membranes.

According to a second aspect of the present invention there is provided a microporous membrane characterised in that it comprises a highly crystalline aromatic polymer bearing at least (a) ether or thioether

and (b) ketone linkages in the polymer backbone.

By "partially crystalline" as referred to in the first aspect of the present invention we mean that the level of crystallinity is at least about 5% and typically above 15% weight fraction. Membranes made by the process of the present invention from certain polymers often have crystallinity above 40%; where those certain polymers are used in the liquid phase-inversion process the membranes prepared thereby have typically crystallinity less than 40%.

By "highly crystalline" in the second aspect of the present invention, we mean a crystallinity of above 40% w/w.

We have found surprisingly that membranes according to the second aspect of the present invention are often flexible. By "flexible" we mean that a membrane can be creased, often a plurality of times, thorough 180° without fracturing.

As examples of polymers which may be used in the process of the first aspect of the present invention may be mentioned inter alia partially crystalline polymers, of the formulae I-IX in the drawings appended hereto.

Whereas the polymer is preferably a homopolymer, for example represented by formulae I-IX, e.g. PEEK or PEK, we do not exclude the possibility that it may be a copolymer e.g. PEEK/PEK, PEEK/PES, PEK/PES, PEEK/PEES, wherein the copolymer units PES and PEES are represented by the formulae X and XI respectively in the drawings appended hereto.

Each such polymer-type is herein referred to for convenience by the trivial name appended thereto in the drawings.

It will be appreciated that where the polymer used in Step A of the process according to the first aspect of the present invention, or the polymer of which the microporous membrane according to the second aspect according to the present invention is comprised, is a copolymer the nature and molar percentage of the "comonomer" will be chosen such that (i) it does not unduly decrease the crystallinity of the copolymer and (ii) the inter-aromatic links therein are non-hydrolysable under the conditions of preparation and use of the microporous membrane. As examples of comonomer units may be mentioned inter alia aromatic sulphones, sulphides, and biaryls.

We do not exclude the possibility that the microporous membrane of the present invention may comprise a mixture of the at least partially crystalline aromatic polymer containing in-chain ether or thioether and ketone linkages with a further polymer which is not extracted in Step D of the process (non-extractible polymer e.g. a second such partially crystalline aromatic polymer.

It will be appreciated that where the polymers of formulae I-IX bear one or more substituents, the one or more substituent should not unduly reduce or impair the crystalliity of the polymer.

"Latent solvent" is more clearly defined in "Synthetic Polymer Membranes, a Structural Perspective", Second Edition, R R Kesting, J Wiley and Sons, New York at pages 261-2.

The latent solvent should be a good solvent for the polymer at high temperature, by which we mean above about 50°C below the melting point of the polymer, and a poor solvent at low temperature, e.g. room temperature to 100°C. It should be substantially stable and involatile at the temperature at which the process of the present invention is carried out, e.g. up to about 400°C. Typically, the polymer is soluble therein at about 320-340°C.

As examples of latent solvents for use in the process of the present invention may be mentioned inter alia compounds containing a plurality of aromatic rings, e.g. tetraphenyls, or hexaphenyls or preferably polar polyaromatic compounds, e.g. as represented by the formulae XIII-XVI in the drawings appended hereto.

The latent solvents illustrated in formula XIII-XVI may bear one or more suitable substituents, eg a halide. The one or more suitable substituent, where present, should not unduly impair the functioning of the latent solvent, eg decrease its thermal stability or increase its volatility.

The latent solvent will be chosen in the light of inter alia the mp of the polymer, the ability of the latent solvent to dissolve the polymer at a suitable temperature, and its thermo-oxidative stability at suitable processing temperatures. The concentration of the polymer in the latent solvent prior to film-forming is typically 10-50 w/w polymer and 90-50 w/w oligomeric latent solvent, preferably about 20% polymer and about 80% latent solvent.

The solution for use in Step A of the process of the present invention is formed by dissolving the polymer, typically in particulate form, in the latent solvent under an inert atmosphere, at a temperature and timespan sufficient to substantially completely dissolve the polymer. A pore-forming agent may be added to the solution, e.g. an inorganic salt, an organic compound or an organic or inorganic polymer soluble therein, eg an aromatic polysulphone or a silicone.

In Step B of the process according to the present invention where a higher viscosity is required, e.g. for extrusion, a lower temperature will be used and where a lower viscosity is required, e.g. for fibre spinning, a

higher temperature will be used.

We do not exclude the possibility that a further latent solvent may be used in combination with the first latent solvent in Step A of the process according to the present invention, with the proviso that where it is used it does not unduly impair the solvent power of the first latent solvent or unduly react with the polymer in the presence of the latent solvent.

Where the flexible microporous membrane according to the second aspect of the present invention is a sheet membrane it is typically formed by moulding, eg injection or compression, casting or extruding the polymer solution as a thin film, typically of thickness between 20 and 500 µm. The membrane can optionally be supported by a porous fabric or sheet which can withstand the processing conditions, e.g. of PTFE, carbon fibre or stainless steel.

Alternatively, the membrane can be unsupported in which case the film could be moulded on, or extruded onto, a nonporous surface, e.g. a drum or band of stainless steel or PTFE or a sheet of glass. The latent solvent may be extracted from the membrane before it is removed from the aforementioned surface.

We do not exclude the possibility that the membrane may contain particulate reinforcement, e.g. powdered glass, fumed silica or chopped carbon fibre, in addition to the crystalline polymer

Where the flexible microporous membrane according to the second aspect of the present invention is a capillary membrane it may be formed by extruding the polymer solution through the outer annulus of a coaxial die. Through the inner nozzle of the co-axial die a suitable fluid, e.g. an inert gas or liquid, or non-solvent, flows.

In Step C of the process according to the present invention the polymer is precipitated by allowing or causing the shaped solution, i.e. film or capillary, to cool at a suitable rate. The skilled man, by simple experiment, will find a suitable cooling rate.

In Step D of the process according to the present invention the latent solvent is removed from the membrane by treatment with an appropriate solvent therefor, (hereinafter referred to for convenience as "washing solvent"), eg DMF or acetone, at an appropriate temperature, e.g. between room temperature and the boiling point of the washing solvent. Where a relatively involatile washing solvent such as DMF is used further treatment with a more volatile organic medium, e.g. acetone, may be necessary to remove traces of the less volatile washing solvent from the membrane.

The membranes prepared by the process according to the present invention tend to be highly crystalline, typically above 40%w/w. However, they may be further treated, for example, to enhance crystallinity.

As examples of such further treatment to enhance crystallinity may be mentioned inter alia heating the dry polymer above the Tg thereof, i.e. annealing; or treatment with a warm polar aprotic solvent, e.g. dimethylformamide (DMF) or dimethylacetamide (DMA). Where treatment with a warm polar aprotic solvent is carried out such a solvent may later be removed by suitable treatment, e.g. by washing with acetone.

We have found surprisingly that the microporous membrane according to the present invention has a higher level of crystallinity than the membrane described in our copending British Patent Application No. 8901672.9 and has good strength and toughness. Furthermore, we have found that the membrane according to the present invention is less brittle than the crystalline microporous polyetherketone structure described in our European Patent Specification No. 0,297,744A.

We have found that the microporous membrane according to the present invention may have pore diameters typically between 0.001 µ and 1.0 µ. Accordingly, they may be used for ultrafiltration or microfiltration.

The crystallinity of the membranes described herein was measured by a DSC technique as is more fully described in Blundell et al, Polymer, 1983, Vol 24 (Aug), p953 or by wide-angle X-ray diffraction as described in the aforemetioned publication.

The present invention is further illustrated by reference to the drawings appended hereto. In the drawings:

Figure 1: illustrates certain aromatic polyether or polythioether ketone polymers;

Figure 2: illustrates suitable comonomer units for incorporating into the polymers illustrated in Figure 1;

Figure 3: illustrates a certain copolymer for use in the present invention;

Figure 4 : illustrates latent solvents for use in the present invention;

Figure 5 (a) and (b) are scanning electron micrographs of the surface (X4000) and the cross-section (X15,000) respectively of the membrane prepared in Example 26;

Figure 6, is a schematic representation of the apparatus used in Example 28.

Figures 7 (a) and (b) are scanning electron micrographs of the cross-section (X100) and (X1000) respectively of the hollow-fibre membrane prepared in Example 28; and

Figures 8(a) and (b) are scanning electron micrographs of the inner surface (X2,500) and the outer

surface (X2,500) respectively of the hollow-fibre membrane prepared in Example 28.

In Figure 1, formulae I-VII represent polyether ketone polymers and formulae VIII and IX represent polythioether ketone polymers.

In Figure 2, Formulae X and X1 represent aromatic polymers bearing in-chain ether and sulphone bonds.

In Figure 3, formula XII represents a copolymer containing in-chain ether, ketone, sulphone and biaryl linkages.

In Figure 4, formulae XIII and XIV represent aromatic latent solvents bearing in-chain ether and sulphone links, formulae XV represents a heterocyclic latent solvent and formulae XVI represents an oligomeric aromatic ether latent solvent.

In Figure 5, the scanning electron micrographs reveal high surface porosity and an open network structure for the membrane prepared in Example 26.

In Figure 6, a heated reservoir (1), provided with a nitrogen inlet (2), a filter (3) and spinneret (4), is in operational engagement with an injection pump (5). A cooling bath (6), provided with two low-friction rollers (7), is disposed below the heated reservoir (1) and a wind-up roll (8).

In operation, nitrogen at pressure is charged via nitrogen inlet (2) into the heated reservoir (1) to extrude spinning solution (9) through the filter (3), from the spinneret (4) where it contacts an internal gelating agent pumped from iniection pump (5). The extrudate is pulled over the low-friction rollers (7) in cooling bath (6) and wound onto wind-up roll (8).

From Figure 7, it can be seen that the open network structure found in the flat-sheet membrane of Example 26 is retained for a membrane produced in hollow fibre form.

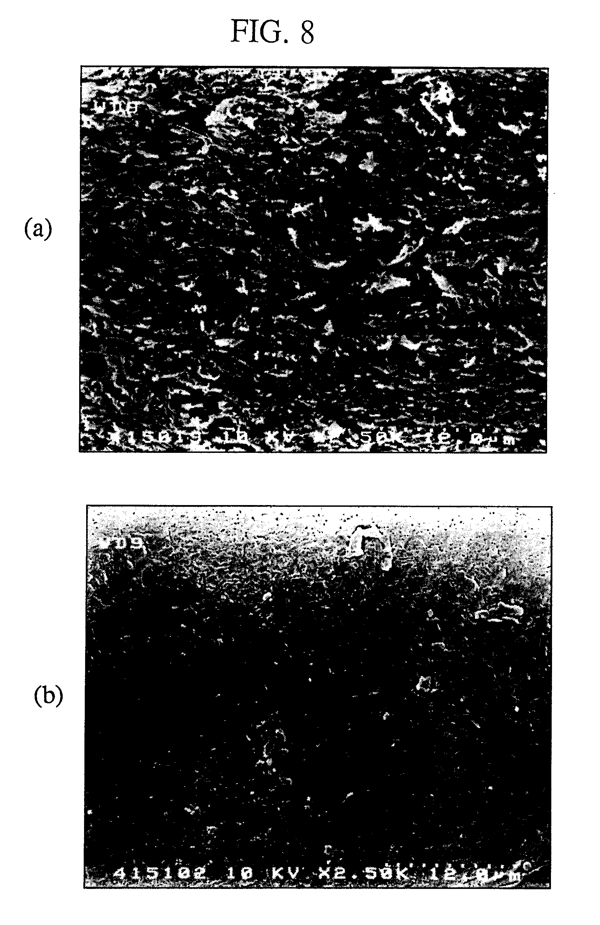

From Figure 8, it can be seen that the outer surface of the hollow fibre membrane prepared in Example 28 contains pores of very much smaller average diameter (typically 0.05-0.2μ) than those of the inner surface (typically 0.5-2μ).

The invention is further illustrated by reference to the following Examples.

## Example 1

This Example illustrates the preparation of a latent solvent, 6-RES, of Formula XIII, for use in the present invention.

Dichloro diphenyl sulphone (0.64 mole; 184.42 g), p-hydroxybiphenyl (228.76 g; 1.344 mole) and potassium carbonate (2.944 mole;406.9 g) were stirred in dimethyl formamide (1850 ml) under nitrogen at reflux for 24 hours, the reaction mixture was cooled to 50° and was then drowned into ice/water (3.7 l). The product was filtered, washed base-free with water and dried to yield a fine white solid 353.8 g (99.7% yield).

Re-crystallisation of the white solid from toluene (3 l) involving treatment with active carbon (10 g), yielded white crystals 288.6 g (81.4% yield).

Re-crystallisation of the white crystals from 2-ethoxyethanol (2 l) yielded white crystals 271.1 g (76.5% yield), Mpt = 201.3°.

The structure and purity (>99%) of the white crystals were confirmed by NMR and mass spectrometry (MS).

## Example 2

This Example illustrates the preparation of a further latent solvent, 6-RSE of Formula XIV, for use in the present invention.

It was made from p-chlorophenyl phenyl sulphone and p,p′-dihydroxy diphenyl by a procedure similar to that described in Example 1. The structure and purity (>98%) of the product were confirmed by NMR and MS.

## Example 3

This Example illustrates the preparation of a yet further latent solvent, a di-imide i.e. 6-RIS of Formula XV, for use in the present invention.

Phthalic anhydride (0.833 mole, 123.32 g), 4,4′-di(3-amino-phenoxy)-diphenyl sulphone, (0.416 mole

180 g) and xylene (2100 ml) were heated at reflux under nitrogen in a flask fitted with a Dean and Stark apparatus for collecting the water produced by the reaction.

After 5 hours expulsion of water stopped and the xylene solution was allowed to cool slowly. The crude product was filtered off, washed with petrol and dried to yield light brown crystals 331 g (87% yield).

The light brown crystals were treated at reflux with toluene and active carbon (20g). The bulk of the product crystallised at reflux and was recovered with the carbon. This mixture was extracted with xylene (3400 ml) at reflux and filtered and evaporated to yield 120 g (41.7% yield) pale cream crystals mpt = 220°. The structure and purity (>99%) of the pale cream crystals were confirmed by NMR and MS.

## Example 5

This Example illustrates the preparation of a blend of a polymer and a latent solvent by Step A of the process according to the present invention.

Polyether ether ketone (ICI Victrex (RTM) PEEK 450P; melt viscosity of 0.425 KNS/$m^2$ at 1000 $S^{-1}$ at 380°C; 11.57 g) and 6-RES (27 g) were charged into a glass tube fitted with a stainless steel stirrer and gas inlet. This was heated (electric furnace) gradually under nitrogen until a clear solution was obtained (~ 339°) then the viscous solution was poured onto aluminium foil to solidify. This solidified blend was broken up and milled using a Glen Creston ultracentrifuge mill fitted with a 0.5 mm screen.

## Example 6

This Example illustrates the preparation of a membrane according to the present invention.

A sample (4.3 g - 30% PEEK/70% 6-RES) of the blend prepared in Example 5 was placed in a mould comprising a 6 x 6 cm cut-out of 0.25 mm thick aluminium foil with aluminium foil backing sheets and placed between stainless steel backing pates 8" x 8". This was pressed at 20 tons at 350-360°C platen temperature for 5 min, then allowed to cool slowly by means of air blown through the platens. The aluminium foil was carefully removed to leave foil on one side of the brittle opaque film.

The composition of the film was found to be 40.2% PEEK 450/59.8% 6-RES.

## Membrane

The film was extracted by refluxing in dimethyl formamide (DMF - 200 ml) for 1 hour. The film became progressively more flexible as the latent solvent was extracted and the remaining aluminium foil was removed after ca 5 min. The extraction was repeated with two fresh volumes of DMF, and then with refluxing acetone (twice). The membrane was dried in vacuum at 90°C.

Sulphur analysis indicated that there was no detectable residual latent solvent present.

A plane membrane disc was mounted in a Sartorius SM 16223 cell. The membrane was first subjected to acetone at 2 bar to wet the membrane pores then to de-ionised 18 MΩ water. The membrane had a pure water flux at 2 bar of 17.5 l/$m^2$/hr (litres/square meter membrane surface per hour).

The acetone and nitrogen fluxes at 2 bar were found to be 29.6 and 2.13 x $10^4$ l/$m^2$/hr respectively.

Mettler DSC analysis of a sample of the membrane showed melting point Tm = 347.1°C; heat of fusion $\Delta H_F$ = 68.3 J/g. If the heat of fusion of PEEK is taken as 130 J/g (see the hereinbefore mentioned Blundell reference) the membrane has a crystallinity of 52.6%, This is greater than the crystallinity of PEEK from the melt, which is typically about 30%.

## Example 7

This Example illustrates a further membrane according to the present invention.

The procedure of Example 6 was repeated except that the blend consisted of 20% w/w PEEK 450/80% 6-RES instead of 30% w/w PEEK 450/70% 6-RES. The composition of the compression moulded film before extraction was found to be 29.7% PEEK 50/70.3% 6-RES.

The water flux was determined as in Example 2 and was found to be 310 l/$m^2$/hr at 2 bar. The nitrogen flux was found to be 1.74 x 105 l/$m^2$/hr at 2 bar.

In addition, the membrane was found to have a 99.6% rejection of a 0.1% aqueous suspension of 0.05

μm particle diameter polystyrene latex.

Example 8

This Example illustrates a yet further membrane according to the present invention.

The procedure of Example 6 was repeated except that the blend consisted of 40% w/w, PEEK 450/60% 6-RES instead of 30% w/w PEEK 450/70% 6-RES. The composition of the film was 50.6% PEEK 450/ 49.4% 6-RES.

The water flux, determined as in Example 2, was found to be 2.43 lit/m$^2$/hr at 2 bar. The nitrogen flux was found to be 4.5 x 10$^3$ l/m$^2$/hr at 2 bar.

Examples 9-12

These Examples illustrate the process according to the invention using further latent solvents.

The procedure of Example 6 was repeated except that the latent solvents, blends and the concentrations thereof shown in Table 1 were used, instead of 30% PEEK/70% 6-RES.

Nitrogen flux was measured using a Sartorius SM 16223 cell.

TABLE 1

| Example No | Latent Solvent | Blend | | Film | Nitrogen Flux |
|---|---|---|---|---|---|
| | | % w/w Latent Solvent | % w/w PEEK 450 | % w/w PEEK 450 | (l/m$^2$/hr at 2 bar |
| 9 | 6-RSE | 70 | 30 | 34.9 | 6.47x10$^4$ |
| 10 | 6-RIS | 60 | 40 | 47.5 | 8.0x10$^3$ |
| 11 | 6-RIS | 70 | 30 | 40.9 | 3.85x10$^4$ |
| 12 | 6-RIS | 80 | 20 | 31.1 | 1.54x10$^5$ |

Example 13

This Example illustrates the process and membrane of the present invention.

Polyetheretherketone (ICI Victrex (RTM) PEEK 450P; 9.4g) and 6-PPE (Monsanto OS-138 (RTM); 37.6 g) were charged into a glass tube fitted with a stainless steel stirrer, thermocouple, and gas inlet. The mixture was heated (electric furnace) with stirring under nitrogen until a clear solution was obtained (≃ 340°C), which was poured onto aluminium foil to give, on cooling, a tough opaque sheet about 3mm thick. The composition of the sheet (w/w) was found to be 30.0% PEEK and 70.0% 6-PPE.

A square (≃ 2.5 cm x 2.5 cm) cut from this sheet was compression moulded at 350-260°C (platen temperature) and 2 tons, between two sheets of 0.25mm aluminium foil using a 6 cm square cut-out from a third such sheet as the mould. After 5 minutes at moulding temperature, the press was cooled to 50°C over about 2 hours by blowing air through the platens.

The aluminium foil was dissolved away from the moulding by immersion in 15% (w/v) aqueous hydrochloric acid, leaving a tough film which was extracted in refluxing acetone for 3 hours to remove the latent solvent and give a tough, flexible, microporous membrane.

Analysis of the membrane by differential scanning calorimetry (DSC) showed a polymer melting point of 350.8°C and a heat of fusion 63.1 J/g. Given a heat of fusion for PEEK of 130 J/g (see aforementioned paper by Blundell et al) the crystallinity of the polymer of which the membrane was comprised was determined to be 48.5%. An independent measurement of crystallinity, using wide-angle X-ray diffraction (see aforementioned paper by Blundell et al.) gave a value of 47.1%. Examination of the membrane by scanning electron microscopy revealed its structure to consist of a uniform, isotropic network of interlocking

fibrils about 0.05 - 0.1 μ in diameter.

A disc (25mm diameter x 0.23mm thick) was cut from the membrane and supported on a non-woven polyethylene cloth mounted in a Satorius SM 16223 cell. The nitrogen gas flux, measured at 2 bar, was found to be 1.24 x $10^5$ $1/m^2/hr$. The disc was then wetted with acetone and the pure acetone flux, measured at 2 bar, was found to be 476 $1/m^2/hr$. The acetone was exchanged for water without allowing the membrane to dry out, and the pure water flux, measured at 2 bar, was found to be 205 $1/m^2/hr$.

The membrane was then dried, and organic solvent fluxes at 2 bar were determined successively for toluene (217 $1/m^2/hr$), N-methyl pyrrolidone (56 $1/m^2/hr$) and 1,1,1-trichloroethane (1,1,1-TCE) (113 $1/m^2/hr$).

A second disc was cut from the membrane and used to filter 20 $cm^3$ of a 0.1% aqueous suspension of 0.05 μ fluorescent-labelled polystyrene microspheres (Polysciences 'Fluoresbrite') at 2 bar. Rejection of the microspheres was 100%. Since ultrafiltration is conventionally understood to involve rejection of particles smaller than 0.1 μ in diameter (see for example 'Handbook of Industrial Membrane Technology', M.C. Porter (Ed.), Noyes Publications, 1990; Preface) the membrane of this Example can be used as an ultrafiltration membrane.

Examples 14-25

These Examples illustrate the process and membranes according to the present invention from further polymers.

The preparation and characterisation procedures described in Example 13 were repeated except that different aromatic polyetherketones, including a copolymer and a blend of homopolymers were used, the latent solvent 6-RES instead of 6-PPE was used in Examples 14-17, 20,21 and 23-25 and different ratios of polymer to latent solvent were used. The copolymer CO-SK used in Example 23 had the structure shown in Formula XII, and in Example 24 a 1:1 (w:w) mixture of the two homopolymers PEEK 450P (structure I) and PEK 390 (structure II) was used. The extraction solvent for 6-RES was DMF at reflux, followed by acetone, and 6-PPE was extracted using refluxing acetone alone.

Table 2 provides examples both of ultrafiltration membranes (Examples 17, 19, 23 and 25) and microfiltration membranes (Examples 15, 16, 19, and 24). The 0.03 μ and 0.006 μ particle-diameter gold sols used to characterise membranes prepared in Examples 23 and 25 were Janssen Aurobeads (RTM), G30 and G5 respectively. The remaining membranes in Table 2 were characterised

TABLE 2

| EXAMPLE | LATENT SOLVENT | POLYMER | FILM: % W/W LATENT SOLVENT before extractn | NITROGEN FLUX (2 bar) (1/m²/hr) | ACETONE FLUX (2 bar) (l/m²/hr) | WATER FLUX (2 bar) (l/m²/hr) | TOLUENE FLUX (2 bar) (l/m²/hr) | NMP FLUX (2 bar) (l/m²/hr) | 1,1,1-TCE FLUX (2 bar) (l/m²/hr) | 100% REJECTION OF PARTICLES (μ) | CRYSTALLINITY (%) | |
|---|---|---|---|---|---|---|---|---|---|---|---|---|
| | | | | | | | | | | | DSC | XRD |
| 14 | 6-RES | PEEK 450P | 84.4 | $5.00 \times 10^{6}$ | - | 46,200 | a | a | a | 4.3 | 46.1 | a |
| 15 | 6-RES | PEEK 450P | 78.3 | $3.76 \times 10^{5}$ | 2,248 | 928 | a | a | a | a | 52.5 | a |
| 16 | 6-RES | PEEK 450P | 77.0 | $2.51 \times 10^{5}$ | 1,449 | 582 | a | a | a | 0.25 | a | a |
| 17 | 6-RES | PEEK 450P | 71.9 | $2.27 \times 10^{5}$ | 920 | 365 | 431 | 104 | 248 | 0.05 | 47.2 | 49.8 |
| 18 | 6-PPE | PEEK 450P | 76.5 | $2.30 \times 10^{5}$ | 1,034 | 425 | a | a | a | 0.25 | 47.3 | a |
| 19 | 6-PPE | PEEK 450P | 68.1 | $9.24 \times 10^{4}$ | 308 | 133 | a | a | a | 0.05 | a | a |
| 20 | 6-RES | PEK 390 | 71.3 | $5.93 \times 10^{4}$ | 162 | 75 | a | a | a | a | a | a |
| 21 | 6-RES | PEK 390 | 64.2 | $5.14 \times 10^{4}$ | 135 | 64 | 111 | 14 | 34 | a | a | 49.0 |
| 22 | 6-PPE | PEK 390 | 61.4 | $5.29 \times 10^{4}$ | 169 | 73 | 79 | 19 | 37 | a | a | 46.0 |
| 23 | 6-RES | CO-SK | 74.6 | $1.04 \times 10^{5}$ | 296 | 124 | 141 | 17 | 56 | 0.03 | a | a |
| 24 | 6-RES | PEEK/PEK | 79.4 | $1.79 \times 10^{5}$ | 978 | 409 | a | a | a | 0.25 | a | a |
| 25 | 6-RES | PEEK 450P | 49.4 | $6.5 \times 10^{3}$ | - | 2.4 | a | a | a | 0.005 | a | a |

a : Not measured;
b : Gold sol;
particles: polystyrene except Examples 23 and 25;
XRD: X-ray diffaction
DSC: Differential scanning calimetry;

using aqueous suspensions of polystyrene microspheres, as described in Example 13.

Example 26

This Example illustrates the preparation of a microporous membrane according to the present invention prepared by casting.

A solution of PEEK 450P (7.05 g) in 6-PPE (39.95 g) was prepared under nitrogen at 350° C, as described in Example 13, and this solution (containing 15 wt% of polymer) was cast onto aluminium foil to give a film which, after cooling and extraction in refluxing acetone, gave a tough microporous membrane of thickness 0.84mm. Scanning electron micrographs (Figure 5) of the surface and cross-section of the membrane, showed its very high surface-porosity and fibrillar-network structure. This membrane had an acetone flux of 1932 l/m²/hr at 2 bar and a water flux of 785 1/m²/hr at 2 bar, and gave 100% rejection of a 0.5 μ polystyrene latex. The membrane could be creased repeatedly through 180° without fracturing, whereas in contrast a membrane of similar thickness prepared as described in European Patent Specification No. 0,297,744 (Example 6, Table 2, Run 10) proved extremely brittle, and fractured on bending through less than 90°.

Example 27

This Example illustrates a membrane according to the present invention comprising inorganic particles.

A polymer solution was prepared as in Example 13 from a blend of PEEK 450 (9.4 g) and 6-PPE (37.6 g), except that fumed silica (Degussa Aerosil 300, 1.0g) was added as reinforcing particulate filler. After compression moulding and extraction as described in Example 13, the resulting silica-containing membrane showed an acetone flux at 2 bar of 229 1/m²/hr, and a pure water flux at the same pressure of 107 1/m²/hr. Organic solvent fluxes were determined at the same pressure for toluene (105 1/m²/hr), N-methyl pyrrolidone (23 1/m²/hr), and 1,1,1-trichloroethane (56 1/m²/hr).

Example 28

This Example illustrates a membrane according to the present invention in the form of spun hollow fibre. A 26% w/w solution of PEEK 450P in 6-PPE was prepared by dissolving a portion of polymer (8.5g) in latent solvent (24 g) at 340° C under nitrogen. This solution was charged to the heated (340° C) reservoir of a spinning unit, shown schematically in Figure 6 and was extruded under nitrogen pressure via a stainless steel tube-in-hole spinneret (hole diameter 1.5mm, tube size 0.55 mm outside diameter). 'Santotherm 66' (a mixture of terphenyls) was used as the internal gelating agent, at an injection rate of 10 cm³/minute. The extrudate was quenched in a bath of cold water, via an air gap of 2 cm, and was collected and extracted with acetone in a sohxlet extractor for 8 hours to remove both the latent solvent and internal gelating agent.

The resulting hollow-fibre membrane was found to have an average wall thickness of 0.10mm and gave a nitrogen flux at 0.68 bar of 1.24 x $10^5$ 1/m²/hr, and an acetone flux at 1 bar of 295 1/m²/hr. Examination of the membrane cross-section by scanning electron microscopy revealed a similar interlocking fibrillar structure to that observed in the flat-sheet membranes described above in Example 26, but with the addition of a thin, finely porous skin on the outer (though not the inner) face of the membrane. Figures 7 and 8 are electron micrographs showing these features, which together reveal an asymmetric structure for this membrane; the average pore-size in the outer surface being very much smaller than that observed for the bulk and inner surface of the membrane.

**Claims**

1. A process for the preparation of a flexible microporous membrane comprising an at least partially crystalline aromatic polymer bearing in-chain (a) ether or thioether and (b) ketone linkages which process is characterised in that it comprises the steps of:

(A) dissolving the polymer in a latent solvent therefor:

(B) shaping the solution into a desired shape;

(C) allowing or causing the shaped solution to cool such that a membrane of a suitable form, shape, size

and porosity is precipitated; and

(D) removing the latent solvent therefrom by washing it with at least one washing solvent.

2. A process as claimed in Claim 1 wherein the polymer used in Step A is a homopolymer.

3. A process as claimed in Claim 2 wherein the polymer comprises repeating units of at least one of

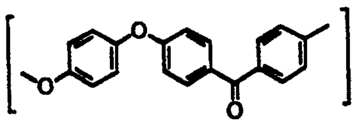

(PEEK),

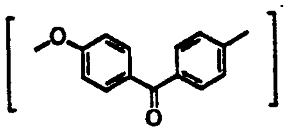

(PEK),

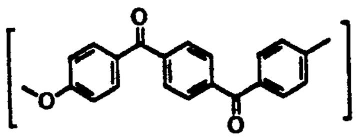

(PEKK),

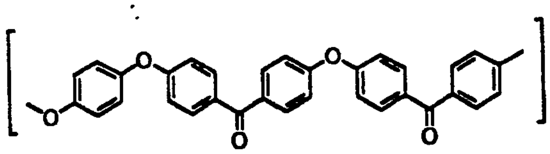

(PEEKEK) ,

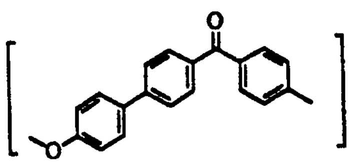

(PEDK) ,

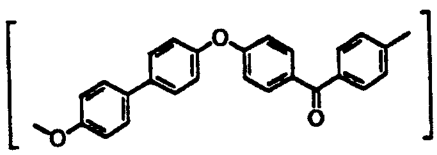

(PEDEK),

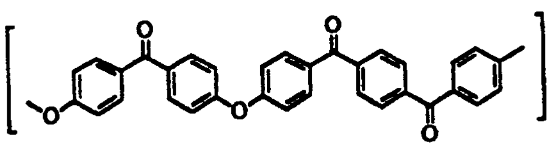

(PEKEKK),

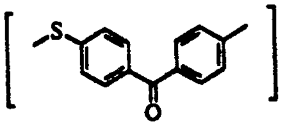

(PSK) or

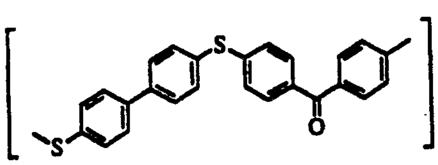

(PSDSK).

4. A process as claimed in Claim 1 wherein the latent solvent is a polar polyaromatic compound.

5. A process as claimed in Claim 4 wherein the polar polyaromatic compound is chosen from the latent solvents

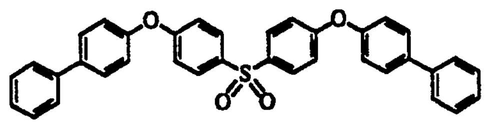

(6-RES),

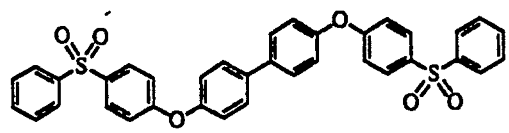

(6-RSE),

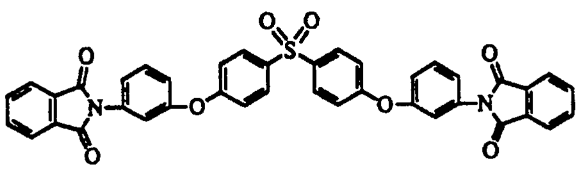

(6-RIS) or

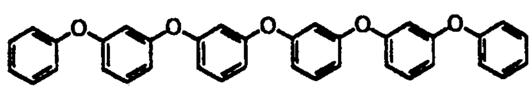

(6-PPE).

6. A process as claimed in Claim 1 wherein the shaping in Step B comprises moulding or extruding the solution prepared in Step A.

7. A process as claimed in Claim 1 wherein the product from Step D is further treated to enhance crystallinity.

8. A microporous membrane characterised in that it comprises a highly crystalline aromatic polymer bearing (a) ether or thioether and (b) ketone linkages in the polymer backbone.

9. A microporous membrane as claimed in Claim 8 further characterised in that it is flexible.

10. A microporous membrane as claimed in Claim 8 further characterised in, in that it comprises repeating units of at least one of

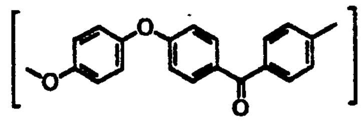

(PEEK),

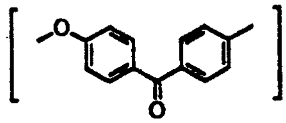

(PEK),

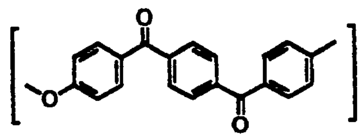

(PEKK) ,

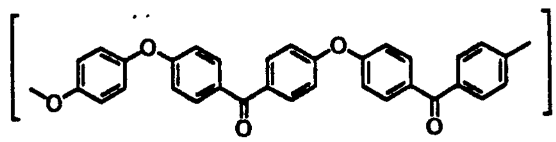

(PEEKEK) ,

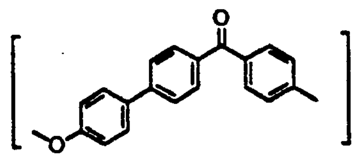

(PEDK) ,

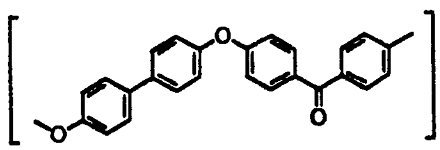

(PEDEK) ,

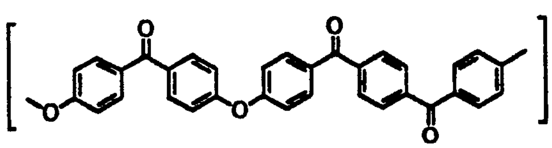

(PEKEKK) ,

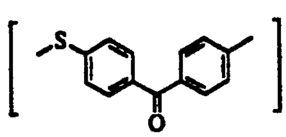

(PSK) or

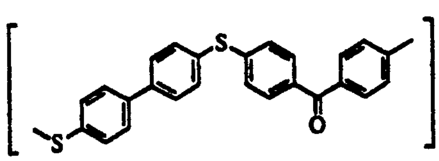

(PSDSK) .

11. A microporous membrane as claimed in Claim 8 wherein the pore diameters are between 0.001μ and 10.μ.

12. A microporous membrane comprising an aromatic polymer bearing ether (a) ether thioether and (b) ketone linkages in the polymer backbone characterised in that the polymer is highly crystalline and flexible.

# FIG. 1

PEEK 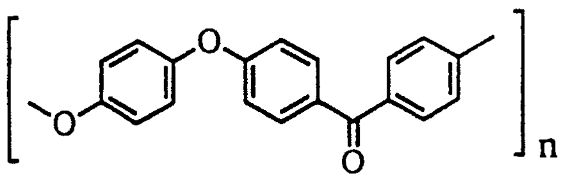 I

PEK 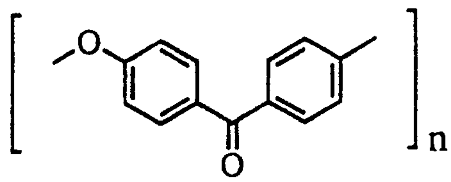 II

PEKK 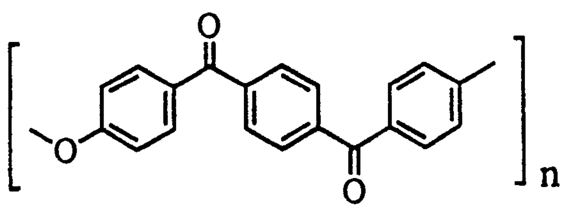 III

PEEKEK 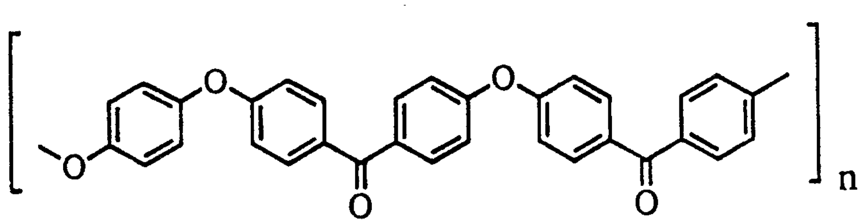 IV

FIG. 1(cont. a)

PEDK
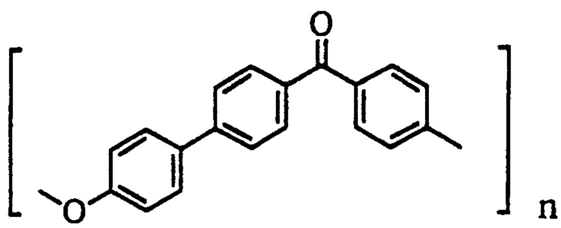
V

PEDEK
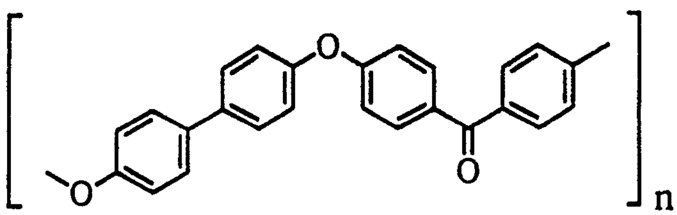
VI

PEKEKK
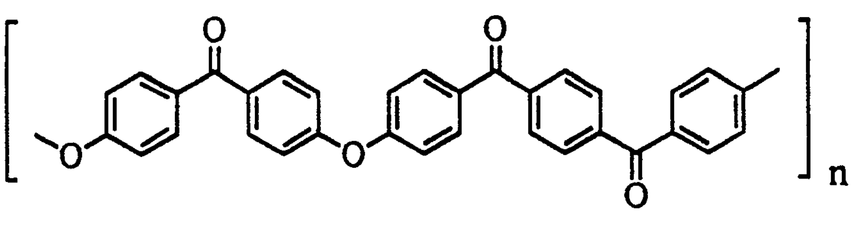
VII

FIG. 1 (cont. b)

PSK

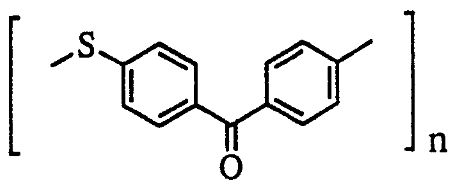

VIII

PSDSK

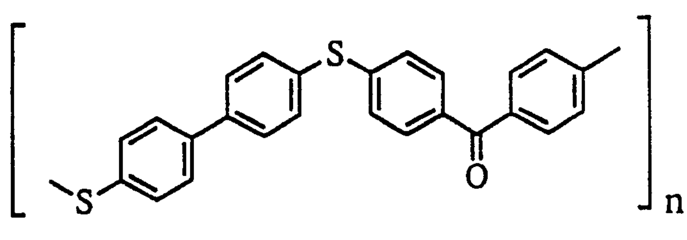

IX

# FIG. 2

PES 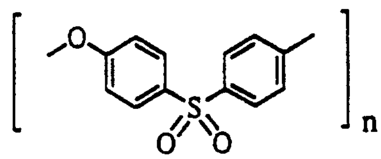 X

PEES 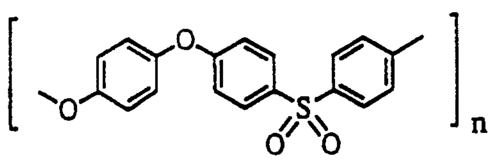 XI

# FIG. 3

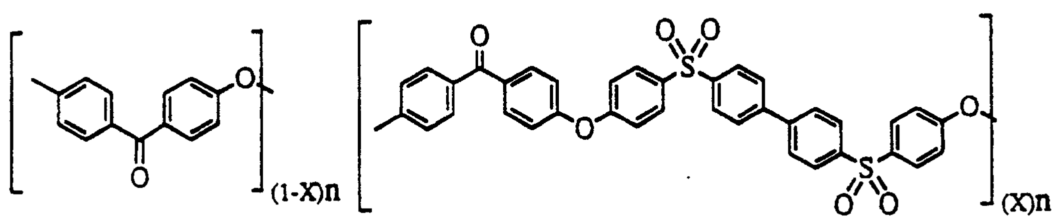 XII

CO-SK (x = 0.125)

FIG. 4

6-RES 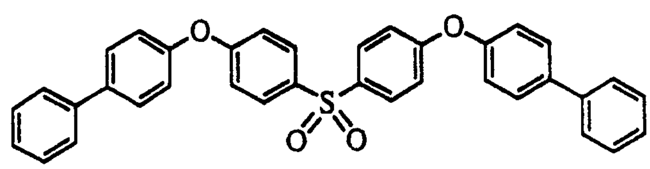 XIII

6-RSE 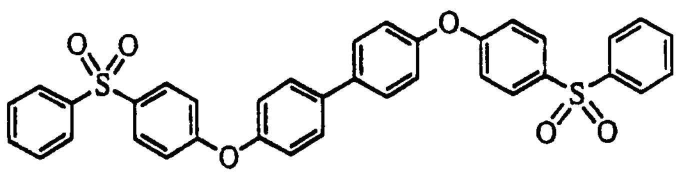 XIV

6-RIS 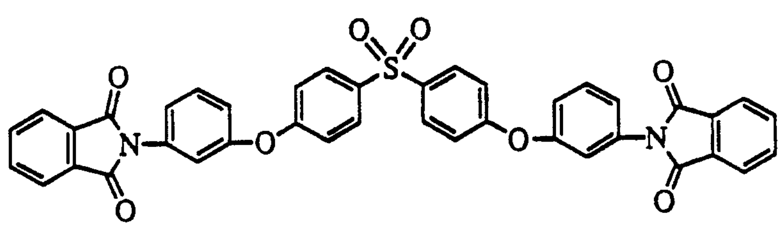 XV

6-PPE 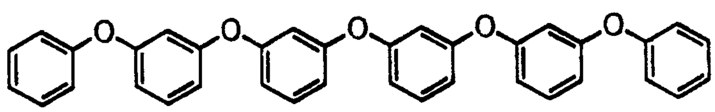 XVI

FIG. 5

(a)

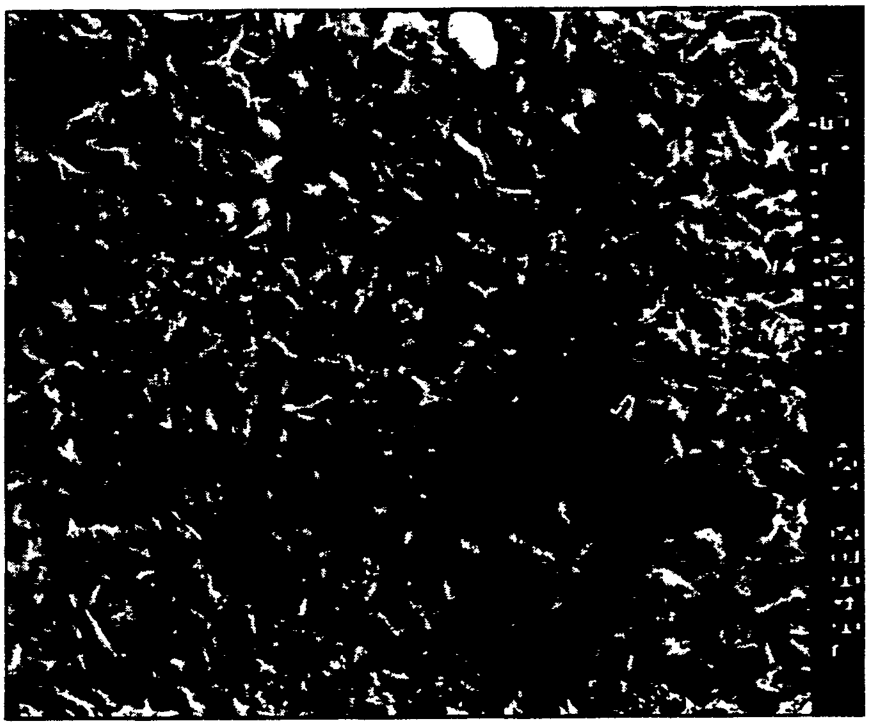

(b)

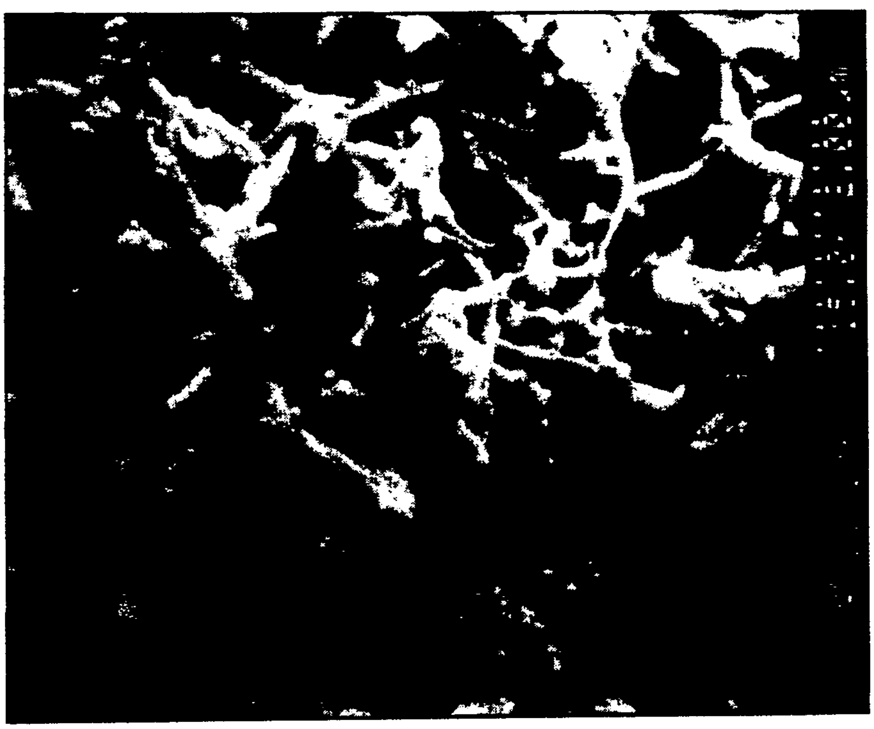

FIG. 6

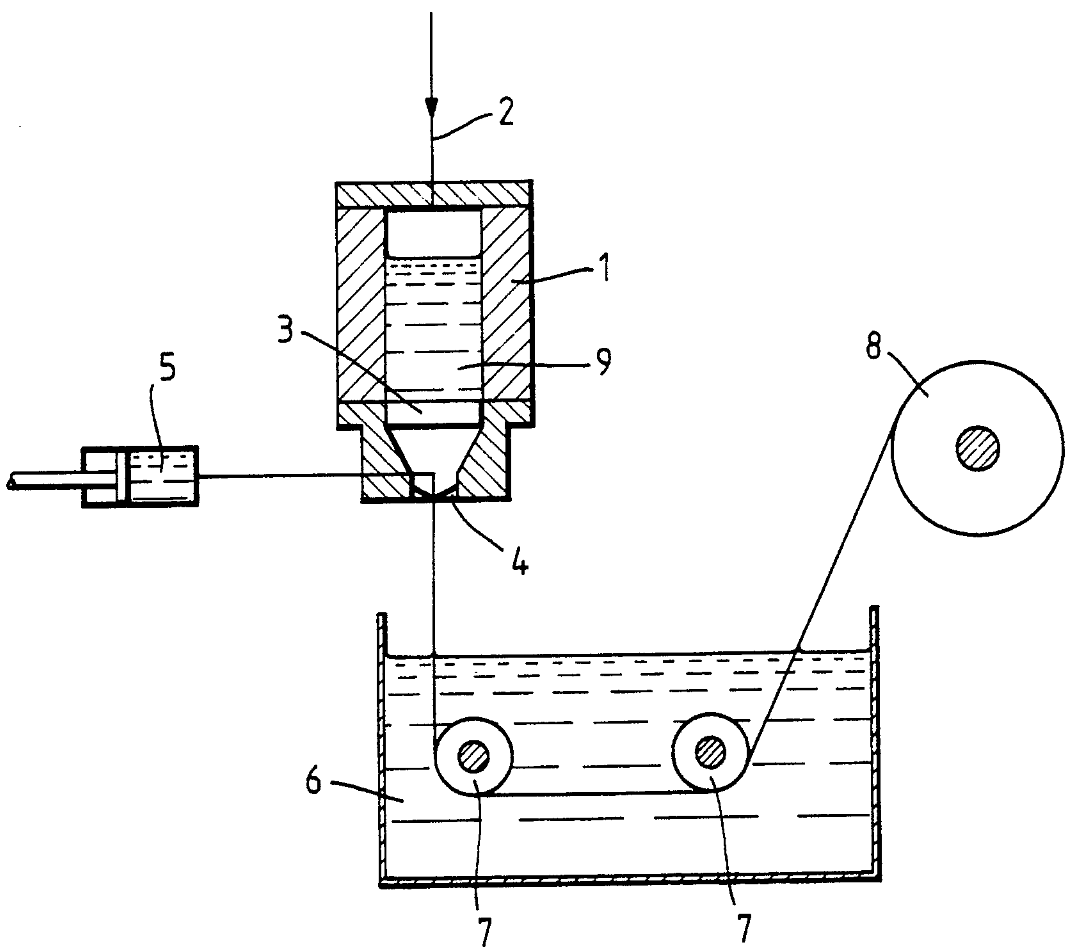

FIG. 7

(a)

(b)

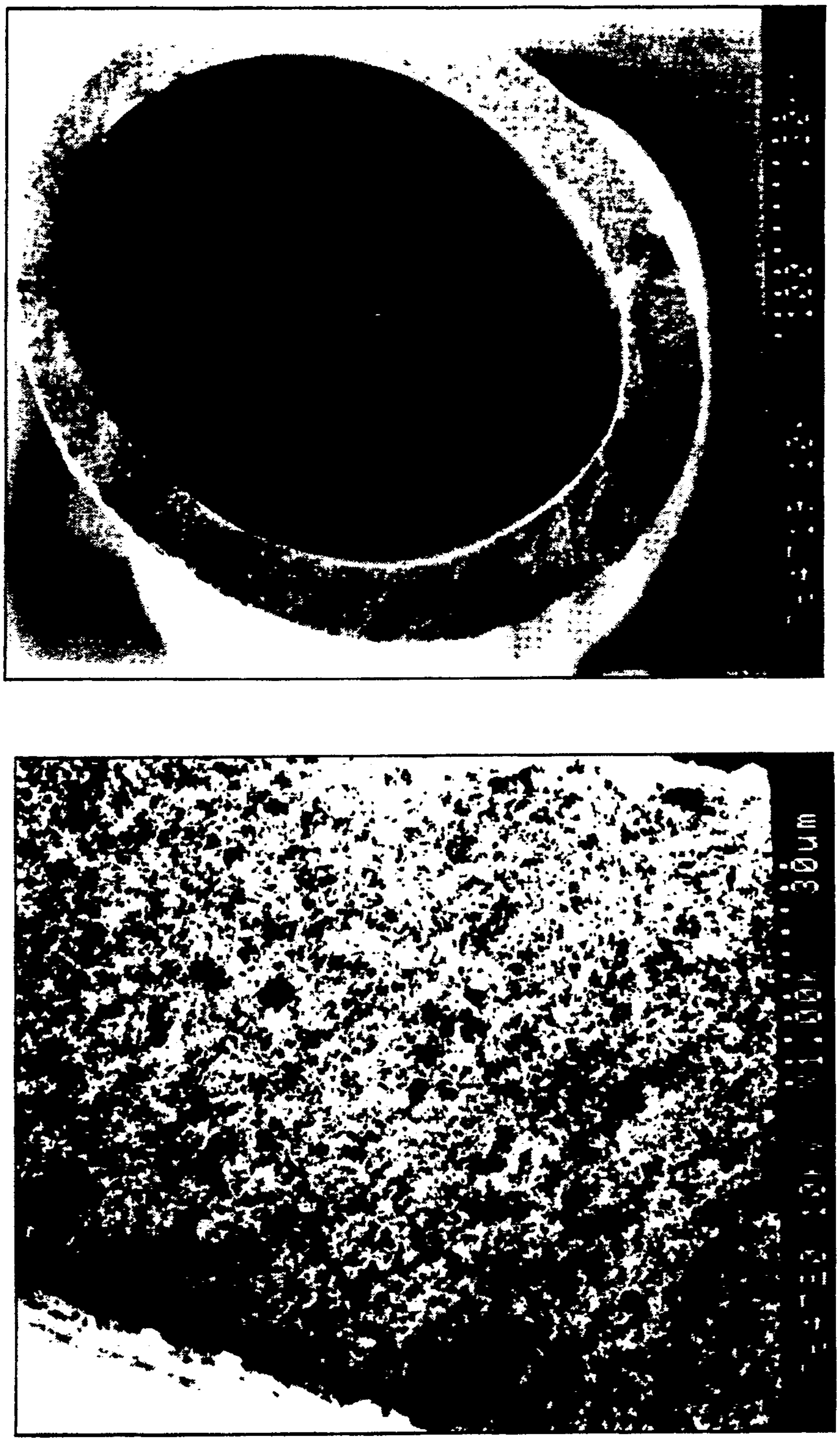

Neu eingereicht / Newly filed
Nouvellement déposé

FIG. 8

(a)

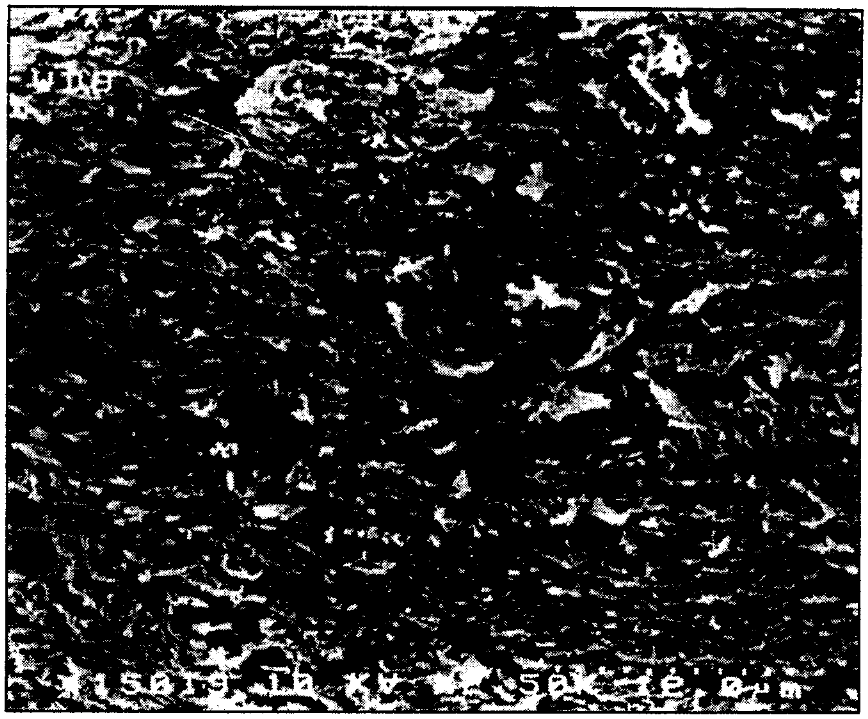

(b)